# EUROPÄISCHE PATENTSCHRIFT

(11) **EP 3 274 236 B1**
(45) Veröffentlichungstag und Bekanntmachung des Hinweises auf die Patenterteilung: **26.03.2025**
(21) Anmeldenummer: 16706975.6
(22) Anmeldetag: 25.02.2016
(51) Int. Cl.: B61B 5/00, B61C 13/04

(54) **ANLAGE ZUM TRANSPORTIEREN VON GEGENSTÄNDEN**
SYSTEM FOR TRANSPORTING OBJECTS
SYSTÈME DE TRANSPORT D'OBJETS

(30) Priorität: 21.03.2015 DE 102015003736
(43) Veröffentlichungstag der Anmeldung: 31.01.2018
(73) Patentinhaber: pentanova cs GmbH, 71032 Böblingen (DE)
(72) Erfinder: RIEGRAF, Martin, 72766 Reutlingen (DE); ROBBIN, Jörg, 72119 Ammerbuch-Pfäffingen (DE)
(74) Vertreter: Ostertag & Partner Patentanwälte mbB
(86) Internationale Anmeldenummer: PCT/EP2016/000322
(87) Internationale Veröffentlichungsnummer: WO 2016/150543

(56) Entgegenhaltungen:
- EP-A1- 0 577 917
- EP-A1- 0 582 348
- WO-A1-2009/059362
- DE-A1- 102008 032 151
- DE-A1- 102010 041 894

## Beschreibung

Die Erfindung betrifft eine Anlage mit einem Transportwagen zum Transportieren von Werkstücken, welcher in einer Transportrichtung auf einer Tragschiene verfahrbar ist.

Bei derartigen Anlagen müssen die Transportwagen mit Energie versorgt werden, wozu bei vom Markt her bekannten Anlagen Stromschienen entlang der Tragschiene verlegt sind, von denen ein Transportwagen über entsprechend angepasste Stromabnehmer Energie erhalten kann. Dies kann über Schleifleitungen oder auch berührungslos erfolgen.

Eine derartige Energieversorgung ist jedoch baulich recht aufwendig, wartungsintensiv und anfällig. Zudem kommt es häufig zu Stillstandszeiten, wenn es Probleme bei der Energieversorgung gibt, da dann meist auch das Schienensystem betroffen ist.

Die Druckschrift DE 10 2010 041 894 A1 beschreibt eine Elektrohängebahn mit einer als Schiene ausgebildeten Tragstruktur. Auf der Tragstruktur läuft ein Transportwagen, der eine Lastaufnahmeeinheit und eine Antriebseinheit umfasst. Die Antriebseinheit weist vordere und hintere Laufkatzen auf, die Antriebsrollen lagern, welche mit Elektromotoren angetrieben werden. Angehängt an die Laufkatzen ein Energieversorgungsmodul zur Speisung der Elektromotoren. Die Antriebseinheit ist mittels einer steuerbaren Zug-Druckkupplung mit der Lastaufnahmeeinheit gekoppelt. Die Lastaufnahmeeinheit weist ihrerseits vordere und hintere Laufkatzen auf, welche durch einen Träger miteinander verbunden sind. Am Träger hängt mittels einer Halteeinrichtung das Fördergut. Eine autarke Energieversorgung ist über einen entsprechenden Zusatzwagen möglich, der einen Energiespeicher trägt.

Die Druckschrift WO 2009/059 362 A1 beschreibt einen Lastaufnahmewagen zum Transport von Werkstücken, der in einer Transportrichtung auf einer Last- und Führungsschiene verfahrbar ist. Eine Tragrolle läuft auf der Trag-Lauffläche der Schiene ab. An ein Anschlussstück des Lastaufnahmewagens kann ein Werkstück oder ein Gehänge mit mehreren Werkstücken angehängt werden. Eine autarke Energieversorgung ist nicht beschrieben.

Es ist daher Aufgabe der Erfindung, einen Transportwagen und eine Anlage der eingangs genannten Art zu schaffen, welche einen effizienten, wartungsfreundlichen und sicheren Betrieb ermöglichen.

Diese Aufgabe wird mit einer Anlage gemäß dem unabhängigen Anspruch 1 gelöst.

Auf diese Weise kann auf eine Installation zur Energieversorgung entlang der Tragschiene verzichtet werden. Eine Störung der Energieversorgung eines Transportwagens beschränkt sich dann stets auf den Transportwagen selbst, so dass ein solcher defekter Transportwagen ausgetauscht werden kann, ohne dass Arbeiten am Schienensystem erforderlich sind.

Für den wiederaufladbaren Energiespeicher kommen insbesondere Akkumulatoren oder Kondensatoren in Betracht.

Das Transportwagen-Fahrwerk umfasst eine in Transportrichtung vorauseilende Vorläufereinheit und eine in Transportrichtung nacheilende Nachläufereinheit, welche mit der Befestigungseinrichtung gekoppelt sind. Das System kann kurvengängig ausgebildet werden, wenn die Kopplungsstellen durch entsprechende Drehkupplungen ausgebildet sind.

Im Hinblick auf den Antrieb ist es Erfindungsgemäß, dass
a) die Vorläufereinheit eine Antriebsrolle und einen Antriebsmotor trägt; und/oder
b) die Nachläufereinheit eine Antriebsrolle und einen Antriebsmotor trägt; wobei
c) die Vorläufereinheit und/oder die Nachläufereinheit wenigstens einen wiederaufladbaren Energiespeicher trägt.

Es können somit nur die Vorläufereinheit oder nur die Nachläufereinheit oder alle beide Einheiten angetrieben sein. Dabei muss nicht immer die angetriebene Einheit auch einen Energiespeicher tragen.

Als effektives Antriebskonzept kann vorgesehen sein, dass der Transportwagen als Transportverband ausgebildet ist, bei dem das Transportwagen-Fahrwerk eine Antriebseinheit und ein oder mehrere passive Transporteinheiten umfasst, die lösbar miteinander gekoppelt sind, wobei zumindest die Transporteinheiten jeweils eine Befestigungseinrichtung umfassen. Auf diese Weise können Antriebskomponenten eingespart werden.

Dabei kann es günstig sein, wenn das Transportwagen-Fahrwerk als Antriebseinheit eine antreibbare Transporteinheit mit einem Fahrwerk, welches die wenigstens eine Antriebsrolle mit sich führt, und eine Befestigungseinrichtung für zumindest ein Werkstück umfasst. In diesem Fall wird die Antriebseinheit zum Transport von Werkstücken genutzt.

Alternativ kann es günstig sein, wenn das Transportwagen-Fahrwerk als Antriebseinheit einen Schleppwagen ohne Tragfunktion mit einer Fahrwerkeinheit umfasst, welche die wenigstens eine Antriebsrolle mit sich führt. In diesem Fall ist eine Art Lok-Prinzip realisiert.

Bei beiden Konzepten ist es von Vorteil, wenn die Antriebseinheit die autarke Energieversorgungseinrichtung mit sich führt. Dann sind keine längeren Verbindungen von der Energiequelle zum Antriebsmotor oder Energiekupplungen zwischen einzelnen Fahrwerkbereichen notwendig.

Dieses Förder- und Energieversorgungskonzept kann besonders effektiv umgesetzt werden, wenn die Tragschiene bodengebunden ist.

Nachfolgend werden Ausführungsbeispiele der Erfindung anhand der Zeichnungen näher erläutert. In diesen zeigen
- Figur 1: eine perspektivische Ansicht einer Anlage zum Transportieren von Werkstücken, wobei ein Abschnitt einer Tragschiene eines Schienensystems mit einem darauf verfahrbaren Transportwagen gezeigt ist;
- Figur 2: eine Seitenansicht des Abschnitts von Figur 1, wobei zusätzlich eine von dem Transportwagen getragene Fahrzeugkarosserie gezeigt ist;
- Figur 3: einen geraden Steigungsabschnitt des Schienensystems der Anlage nach den Figuren 1 und 2 mit einem Transportwagen gemäß einem zweiten Ausführungsbeispiel;
- Figur 4: einen Schnitt senkrecht zur Tragschiene entlang der Schnittlinie IV-IV in Figur 3;
- Figur 5: einen kürzeren Steigungsabschnitt des Schienensystems der Anlage mit dem Transportwagen nach den Figuren 1 und 2;
- Figur 6: einen Abschnitt der Tragschiene mit einem Transportwagen gemäß einem dritten Ausführungsbeispiel;
- Figur 7: einen Abschnitt der Tragschiene mit einem Transportwagen gemäß einem vierten Ausführungsbeispiel;
- Figur 8: eine perspektivische Ansicht des Abschnitts der Tragschiene mit dem Transportwagen nach Figur 7 ohne Fahrzeugkarosserien;
- Figur 9: eine schematische Layoutansicht eines Schienensystems einer Anlage zum Transportieren von Werkstücken.

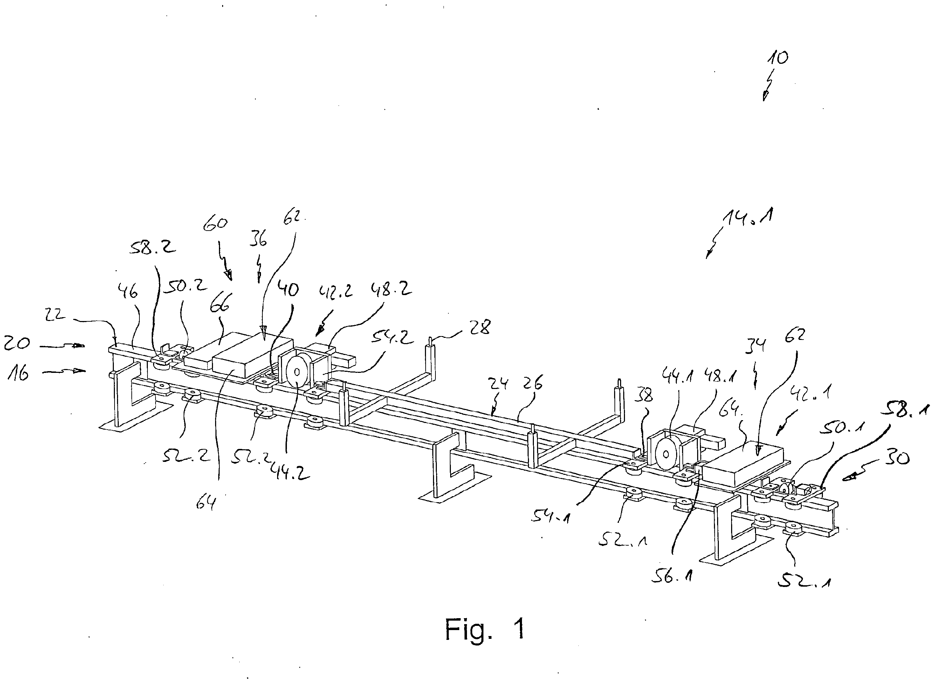

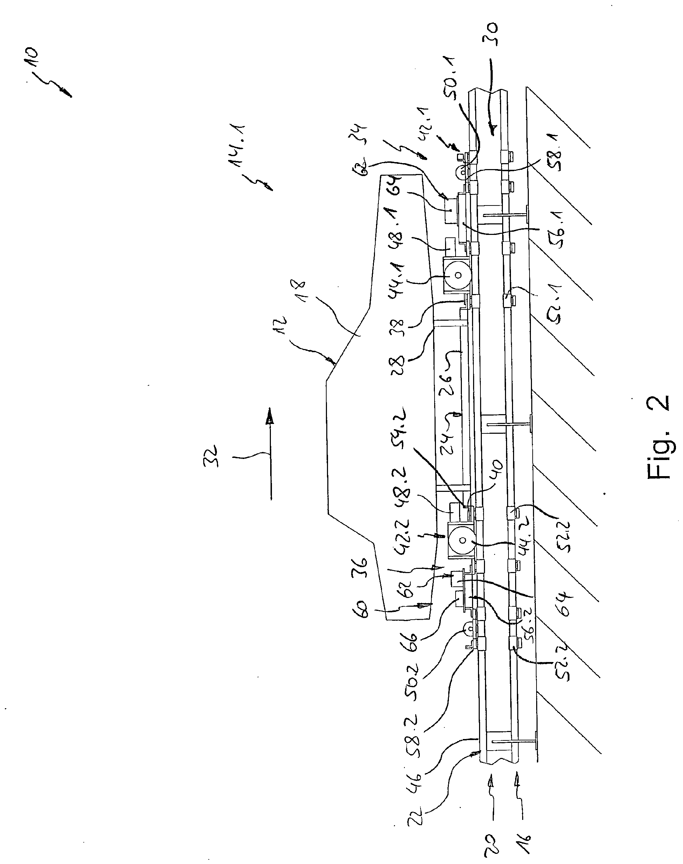

Zunächst wird auf die Figuren 1 und 2 Bezug genommen, in denen mit 10 insgesamt eine Anlage zum Transportieren von Werkstücken 12 bezeichnet ist. Die Werkstücke 12 werden auf Transportwagen 14 transportiert, die auf einem Schienensystem 16 verfahren werden. Nachfolgend werden vier Ausführungsbeispiele erläutert, bei denen die Transportwagen mit 14.1, 14.2, 14.3 und 14.4 bezeichnet sind. Als Beispiel für zu transportierende Werkstücke 12 dienen nachfolgend Fahrzeugkarosserien 18; bei den Werkstücken 12 kann es sich aber auch um andere Werkstücke und insbesondere um Anbau- oder Aufbauteile von Fahrzeugkarosserien 18 wie Stoßfänger, Seitenspiegel oder dergleichen handeln. Kleinere Werkstücke 12 können gegebenenfalls auf einem nicht eigens gezeigten Werkstückträger angeordnet werden, der dann von dem Transportwagen 14 transportiert wird.

Von dem Schienensystem 16 der Anlage 10 ist in den Figuren 1 und 2 lediglich ein horizontal verlaufender Abschnitt 20 einer Tragschiene 22 gezeigt, auf welcher der Transportwagen 14.1 verfährt und welche in an und für sich bekannter Weise als I-Profil ausgebildet und am Boden verankert ist. Die somit bodengebundene Tragschiene 22 ist einspurig. Alternativ kann auch ein mehrspuriges, insbesondere zweispuriges Schienensystem 16 vorhanden sein. Ebenfalls kann die Förderanlage 10 auch ein Hängebahnsystem sein, wie es im Grundprinzip an und für sich bekannt ist.

Der Transportwagen 14.1 umfasst eine Befestigungseinrichtung 24, an welcher eine Fahrzeugkarosserie 18 oder ein entsprechender Werkstückträger für Werkstücke 12 befestigt werden kann. Beim vorliegenden Ausführungsbeispiel ist die Befestigungseinrichtung 24 zur Aufnahme von Fahrzeugkarosserien 18 konzipiert. Hierfür umfasst die Befestigungseinrichtung 24 ein Tragprofil 26 mit Lagerbolzen 28, von denen nur jeweils einer ein Bezugszeichen trägt und welche in an und für sich bekannter Art und Weise mit Gegenelementen an der Fahrzeugkarosserie 18 zusammenarbeiten, so dass die Fahrzeugkarosserie 18 an der Befestigungseinrichtung 24 fixiert werden kann. Die Befestigungseinrichtung 24 kann auch mehrere Sätze von solchen Lagerbolzen 28 aufweisen, die an unterschiedliche Fahrzeugkarosserien 18 mit verschiedenen Abmessungen und Ausgestaltungen angepasst sind, so dass die Befestigungseinrichtung 28 flexibel für unterschiedliche Fahrzeugkarosserietypen genutzt werden kann. Die Befestigungseinrichtung 24 nimmt eine Fahrzeugkarosserie 18 somit unmittelbar auf. Bei einem anderen Förderkonzept ist die Fahrzeugkarosserie 18 in an und für sich bekannter Weise auf einem sogenannten Skid befestigt, welcher dann zusammen mit der Fahrzeugkarosserie 18 an der Befestigungseinrichtung 24 angebracht wird.

Der Transportwagen 14.1 umfasst ein Transportwagen-Fahrwerk 30, welches auf der Tragschiene 22 abläuft und die Befestigungseinrichtung 24 lagert. Beim vorliegenden Ausführungsbeispiel umfasst das Transportwagen-Fahrwerk 30 eine in Transportrichtung 32 vorauseilende Vorläufereinheit 34 und eine in Transportrichtung 32 nacheilende Nachläufereinheit 36. Die Transportrichtung 32 ist lediglich in Figur 2 durch einen Pfeil angedeutet und soll in den Figuren 1 bis 3 und 5 bis 8 stets nach rechts weisen.

Die Vorläufereinheit 34 und die Nachläufereinheit 36 sind jeweils über ein Kupplungsgelenk 38 bzw. 40 mit der Befestigungseinrichtung 24 gekoppelt und lagern diese zwischen sich, so dass der Transportwagen 14.1 in der Lage ist, auch Kurvenabschnitte der Tragschiene 22 zu durchfahren.

Die Vorläufereinheit 34 und die Nachläufereinheit 36 sind weitgehend baugleich, wobei einzelne Bauteile und Komponenten auf einen geraden Abschnitt der Tragschiene 22 bezogen auf eine Ebene senkrecht zur Transportrichtung 32 gespiegelt positioniert sind. Einander entsprechende Bauteile und Komponenten der Vorläufereinheit 34 und die Nachläufereinheit 36 tragen dieselben Bezugszeichen mit den Indizes ".1" bzw. ".2". Die Vorläufereinheit 34 bildet eine Fahrwerkeinheit 42.1 und die Nachläufereinheit 36 bildet eine Fahrwerkseinheit 42.2 des Transportwagen-Fahrwerks 30 des Transportwagens 14.1.

Nachfolgend wird nun die Vorläufereinheit 34 erläutert; das hierzu Gesagte gilt sinngemäß entsprechend für die Nachläufereinheit 36. Die Vorläufereinheit 34 lagert eine Antriebsrolle 44.1, welche auf einer Antriebslauffläche 46 der Tragschiene 22 abrollt und mittels eines Antriebsmotors 48.1 angetrieben wird, der von der Vorläufereinheit 34 mitgeführt wird. Beim vorliegenden Ausführungsbeispiel ist die Antriebslauffläche 46 der Tragschiene 22 die Fläche auf der Oberseite des I-Profils und verläuft entsprechend in horizontalen Abschnitten der Tragschiene 22 ebenfalls horizontal. Bei nicht eigens gezeigten Abwandlungen kann die Antriebslauffläche 46 auch zum Beispiel vertikal verlaufen; in diesem Fall drückt die Antriebsrolle 40.1 als Reibrad seitlich gegen die Tragschiene 22 an.

Um zu verhindern, dass die Vorläufereinheit 34 in Transportrichtung 32 verkippt, d.h. um eine horizontale Achse senkrecht zur Transportrichtung 32, lagert die Fahrwerkeinheit 42.1 der Vorläufereinheit 34 in einem Abstand von der Antriebsrolle 40.1 eine passive Stützrolle 50.1, welche ebenfalls auf der Antriebslauffläche 46 der Tragschiene 22 abrollt. Außerdem lagert die Fahrwerkeinheit 42.1 der Vorläufereinheit 34 mehrere seitliche Führungsrollen 52.1, von denen nur zwei ein Bezugszeichen tragen und welche von beiden Seiten an der Tragschiene 22 anliegen und so in an und für sich bekannter Art und Weise ein Verkippen der Vorläufereinheit 34 zur Seite verhindern.

Beim vorliegenden Ausführungsbeispiel umfasst die Vorläufereinheit 34 einen Antriebsrahmen 54.1, welcher die Antriebsrolle 40.1 mit dem Antriebsmotor 48.1 und zu beiden Seiten der Tragschiene 22 je vier Führungsrollen 52.1 lagert. Der Antriebsrahmen 54.1 ist über eine Stütztraverse 56.1 gelenkig mit einen Stützrahmen 58.1 verbunden, welcher seinerseits die Stützrolle 50.1 und ebenfalls zu beiden Seiten der Tragschiene 22 je vier Führungsrollen 52.1 lagert. Die gelenkige Verbindung des Antriebsrahmens 54.1 mit dem Stützrahmen 58.1 erfolgt wieder über Kupplungsgelenke, die eine Durchfahrt von Kurvenabschnitten der Tragschiene 22 ermöglichen und den Kupplungsgelenken 38, 40 entsprechen, jedoch nicht eigens mit einem Bezugszeichen versehen sind.

Beim vorliegenden Ausführungsbeispiel lagern sowohl die Vorläufereinheit 34 als auch die Nachläufereinheit 36 jeweils eine Antriebsrolle 44.1 bzw. 44.2 sowie den jeweils zugehörigen Antriebsmotor 48.1, 48.2. Bei einer nicht eigens gezeigten Abwandlung kann es ausreichen, wenn nur an der Vorläufereinheit 34 eine Antriebsrolle 44.1 mit Antriebsmotor 48.1 vorhanden ist. Das Transportwagen-Fahrwerk 30 des Transportwagens 14.1 jedenfalls lagert wenigstens eine Antriebsrolle und führt deren Antriebsmotor mit sich.

Für die Energieversorgung der Antriebsmotoren 48.1 und 48.2 der Vorläufereinheit 34 und der Nachläufereinheit 36 führt der Transportwagen 14.1 eine autarke Energieversorgungseinrichtung 60 mit sich. Darunter ist eine Energieversorgungseinrichtung zu verstehen, welche die Energieversorgung der Antriebsmotoren 48.1, 48.2 im Fahrbetrieb, d.h. während der Bewegung des Transportwagens 14.1, unabhängig von externen Energiequellen sicherstellt.

Beim vorliegenden Ausführungsbeispiel ist die Energieversorgungseinrichtung 60 mit wiederaufladbaren Energiespeichern 62 mit wenigstens einer Energiespeichereinheit 64 konzipiert. An jeder Fahrwerkeinheit 42.1, 42.2 ist dabei eine Energiespeichereinheit 64 für den jeweiligen Antriebsmotor 48.1, 48.2 vorhanden. Eine wiederaufladbare Energiespeichereinheit 64 für elektrische Energie kann in Form eines Akkumulators oder eines Kondensators bereitgestellt sein. Bei einer nicht eigens gezeigten Abwandlung kann auch nur eine einzige Energiespeichereinheit für beide Antriebsmotoren 48.1, 48.2 vorgesehen sein. Alternativ können auch Druckgasspeicher als Energiequelle für Druckgasantriebe vorhanden sein.

Die Nachläufereinheit 36 trägt außerdem eine Steuereinrichtung 66, mittels welcher die Antriebsmotoren 48.1, 48.2 angesteuert und synchronisiert werden. Die Steuereinrichtung 66 kommuniziert mit einer nicht eigens gezeigten Zentralsteuerung der Anlage 10.

Wie oben erwähnt, ist der Transportwagen 14.1 durch die gelenkige Verbindung der Befestigungseinrichtung 24 mit der Vorläufereinheit 34 und der Nachläufereinheit 36 kurvengängig. Bei manchen Anlagen muss der Transportwagen 14.1 auch geneigte Abschnitte, d.h. Steigungs- oder Gefälleabschnitte, der Tragschiene 22 überwinden. In solchen geneigten Abschnitten kann es zu Schwierigkeiten kommen, wenn der Anpressdruck der Antriebsrollen 48.1, 48.2 auf die Antriebslauffläche 46 der Tragschiene 22 nicht ausreicht, um ein Durchdrehen der Antriebsrollen 48.1, 48.2 in Steigungsabschnitten oder eine Rutschen des Transportwagens 14.1 in Gefälleabschnitten zu verhindern. Daher umfasst ein abgewandelter Transportwagen 14.2 einen zusätzlichen Neigungsantrieb 68, welcher nur in geneigten Abschnitten der Tragschiene 22 zu Tragen kommt.

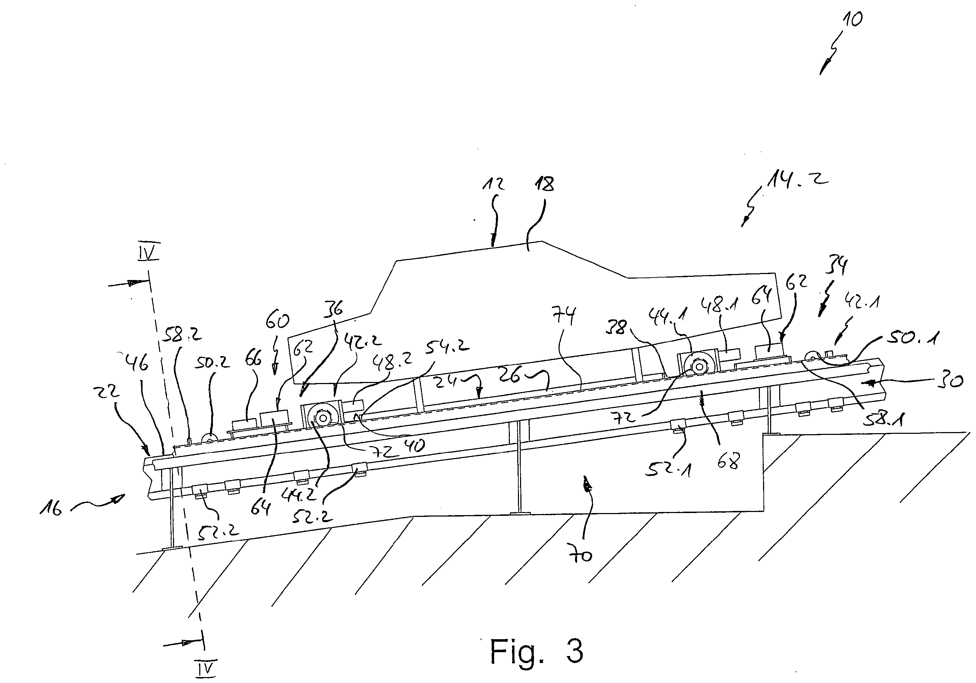

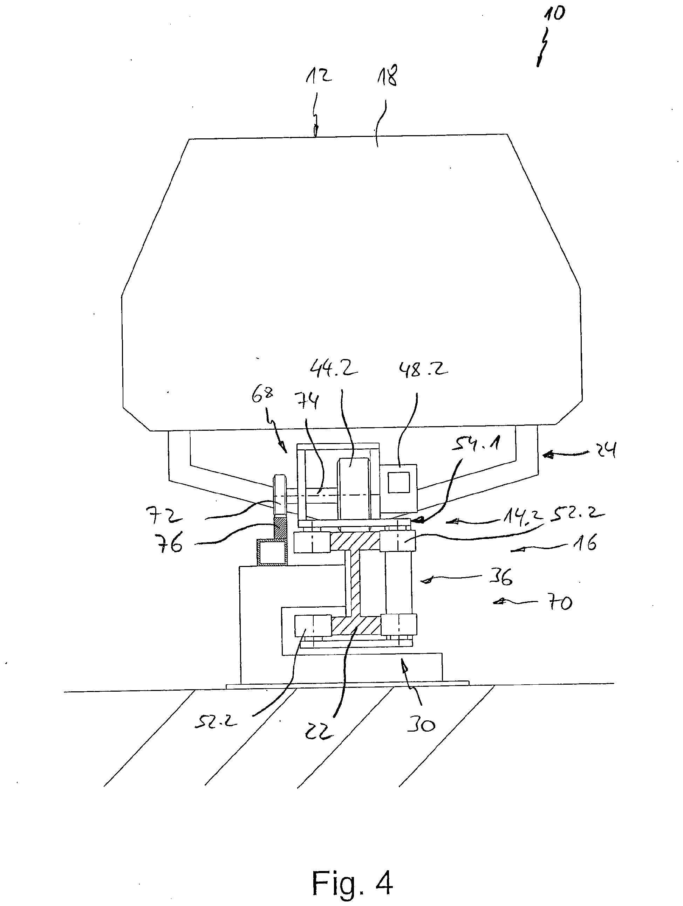

Figur 3 zeigt als Beispiel für einen geneigten Abschnitt der Tragschiene 22 einen Steigungsabschnitt 70, in welchem sich dieser Transportwagen 14.2 befindet. Wie dort und anhand von Figur 4 zu erkennen ist, umfasst der Neigungsantrieb 68 für jede Antriebsrolle 44.1, 44.2 ein Zahnrad 72, welches mittels einer Welle 74 koaxial und drehfest mit der jeweiligen Antriebsrolle 44.1 bzw. 44.2 gekoppelt ist und sich somit bei einer Drehung der Antriebsrolle 44.1, 44.2 mitdreht. Bei dem Schnitt in Figur 4 ist der Stützrahmen 58 mit seinen Bauteilen nicht gezeigt und es sind nicht alle Komponenten mit Bezugszeichen versehen.

Neben der Tragschiene 22 erstreckt sich entlang des Steigungsabschnittes 70 eine Zahnstange 76 in welche das Zahnrad 72 eingreift, wenn der Transportwagen 14.2 den Steigungsabschnitt 70 erreicht. Entsprechendes gilt für einen hier nicht eigens gezeigten Gefälleabschnitt der Tragschiene 22.

In diesem Fall ist die Anordnung der Zahnstange 76 derart, dass die Last über die Antriebrollen 44.1, 44.2 abgetragen wird und die Vortriebs- bzw. Bremskräfte über die Zahnstange 76 aufgenommen werden. Anstelle der Zahnstange 76 kann auch eine Kette vorhanden sein, in welche das Zahnrad 72 eingreifen kann.

Damit der Transportwagen 14.2 den Übergang zwischen einem horizontalen Abschnitt 20 und einem Steigungsabschnitt 70 der Tragschiene 22 passieren kann, müssen die Kupplungsgelenke 38, 40 zwischen der Befestigungseinrichtung 24 und der Vorläufereinheit 34 bzw. der Nachläufereinheit 36 außerdem ein Verschwenken der miteinander verbundenen Komponenten um eine horizontale Schwenkachse ermöglichen, die senkrecht zur Transportrichtung 32 verläuft.

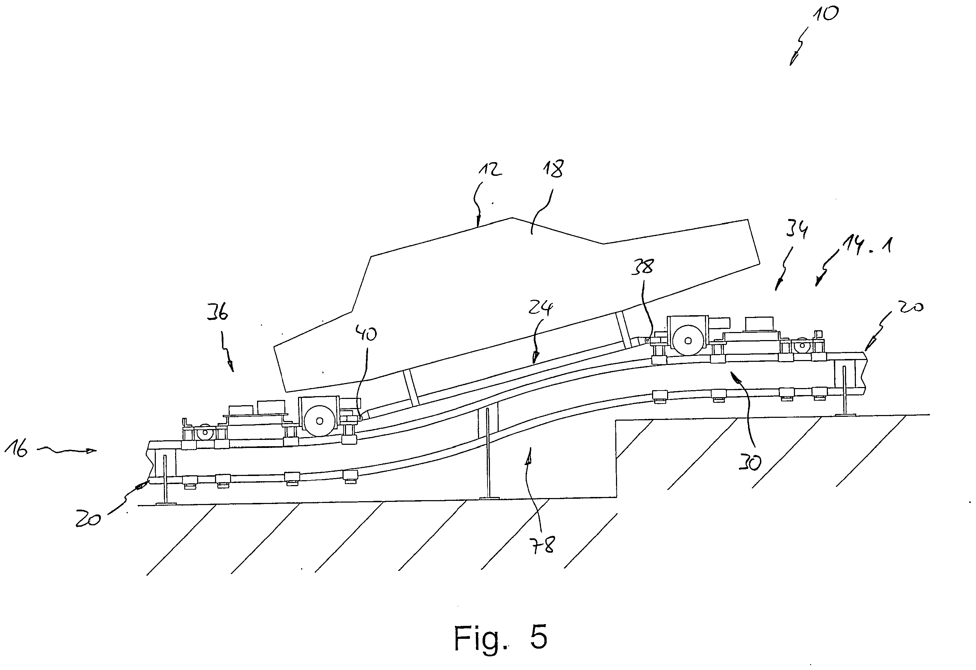

Dies ist insbesondere in Figur 5 zu erkennen, in der ein Steigungsabschnitt 78 der Tragschiene 22 veranschaulicht ist, der so kurz ist, dass sich immer die Vorläufereinheit 34 oder die Nachläufereinheit 36 auf einem von zwei horizontalen Abschnitten 20 befindet, die auf unterschiedlichen Höhenniveaus verlaufen und über den Steigungsabschnitt 78 miteinander verbunden sind.

In einem solchen Fall kann gegebenenfalls auf den Neigungsantrieb 70 verzichtet werden, da der sichere Vortrieb des Transportwagens immer durch die Fahrwerkeinheit 42.1, 42.2 gewährleistet ist, die sich in einem der horizontalen Abschnitte 20 der Tragschiene 22 befindet; daher ist in Figur 5 wieder der Transportwagen 14.1 gezeigt.

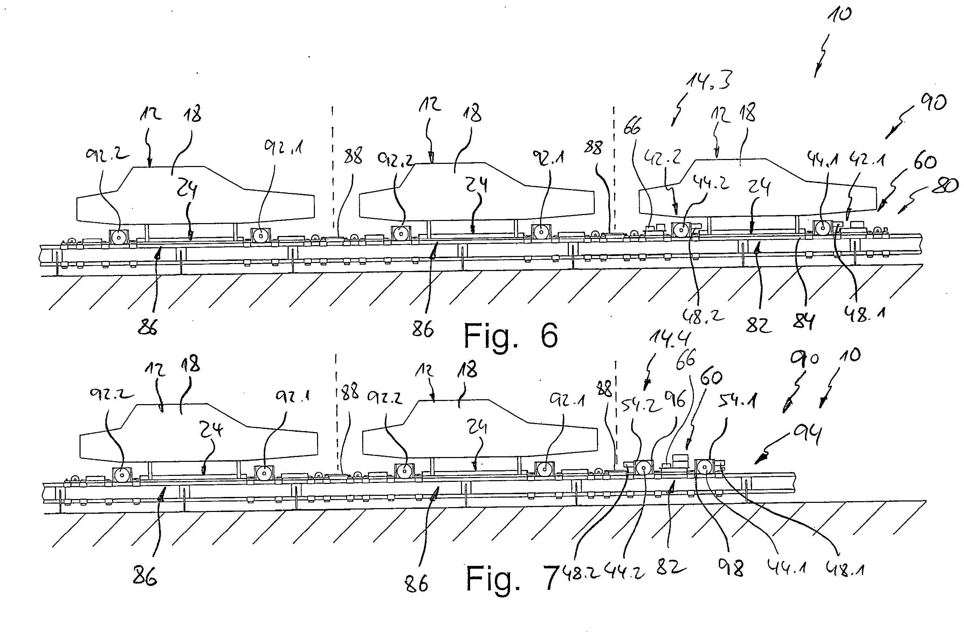

In Figur 5 und in den nachfolgend erläuterten Figuren 6 bis 8 sind der Übersichtlichkeit halber nicht alle Komponenten mit Bezugszeichen versehen. Nicht eigens erläuterte oder gekennzeichnete Bauteile entsprechen den Bauteilen bei dem Transportwagen 14.1 nach den Figuren 1, 2 und 5 bzw. dem Transportwagen 14.2 nach den Figuren 3 und 4.

In Figur 6 ist ein abgewandelter Transportwagen 14.3 mit einem Transportwagen-Fahrwerk 80 gezeigt, das als Antriebseinheit 82 eine antreibbare Transporteinheit 84 und außerdem mehrere passive Transporteinheiten 86 umfasst, die über gelenkige Kupplungen 88 lösbar gekoppelt sind, so dass der Transportwagen 14.3 als Transportverband 90 ausgebildet ist. Die antreibbare Transporteinheit 84 und die passiven Transporteinheiten 86 führen jeweils eine Befestigungseinrichtung 24 mit sich. Dabei umfasst die antreibbare Transporteinheit 84 die Fahrwerkeinheiten 42.1, 42.2 mit Antriebsrollen 44.1, 44.2 und Antriebsmotoren 48.1, 48.2 und entspricht somit dem Transportwagen-Fahrwerk 30 der Transportwagen 14.1, 14.2 nach den Figuren 1 bis 5; die antreibbare Transporteinheit 84 führt folglich auch die Energieversorgungseinrichtung 60 mit sich.

In Transportrichtung 32 hinter der antreibbaren Transporteinheit 84 folgen die passiven Transporteinheiten 86, welche von der antreibbaren Transporteinheit 84 geschleppt werden. Die passiven Transporteinheiten 86 entsprechen ebenfalls jeweils dem Transportwagen-Fahrwerk 30 der Transportwagen 14.1, 14.2 nach den Figuren 1 bis 5 mit dem Unterschied, dass statt der Antriebsrollen 44.1, 44.2 lediglich passive Laufrollen 92.1, 92.2 vorhanden und dementsprechend keine Antriebsmotoren 48.1, 48.2 und keine Energieversorgungseinrichtung 60 vorgesehen sind.

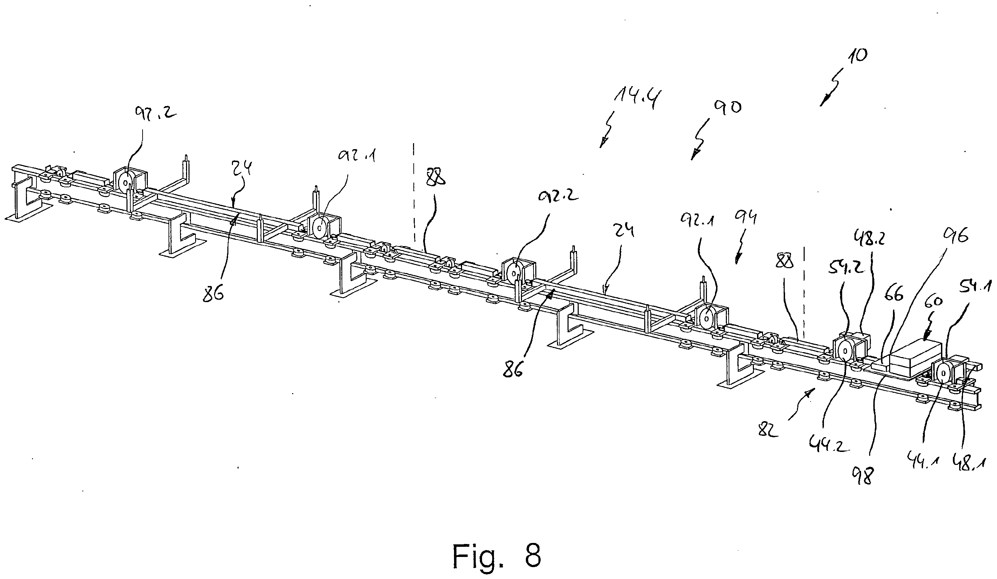

In den Figuren 7 und 8 ist ein nochmals abgewandelter Transportwagen 14.4 mit einem Transportwagen-Fahrwerk 94 gezeigt, welches wieder eine Antriebseinheit 82 und mehrere passive Transporteinheiten 86. Abweichend von dem Transportwagen-Fahrwerk 80 ist die Antriebseinheit 82 jedoch keine Transporteinheit mit Befestigungseinrichtung, sondern ein Schleppwagen 96 ohne Tragfunktion mit einer eigenen Fahrwerkeinheit 98. Diese ist ähnlich aufgebaut wie die Vorläufereinheit 34, allerdings sind dort zwei Antriebsrahmen 54.1, 54.2 mit der jeweils zugehörigen Antriebsrolle 44.1 und 44.2 sowie den nötigen Antriebsmotoren 48.1 und 48.2 miteinander verbunden. Die Fahrwerkeinheit 94 führt eine Energieversorgungseinrichtung 60 für deren Energieversorgung mit sich. Der Schleppwagen 96 umfasst also keine Befestigungseinrichtung 24 und kann kein Werkstück 12 aufnehmen.

Bei nicht eigens gezeigten Abwandlungen können die wiederaufladbaren Energiespeicher 62 auch nicht von der Antriebseinheit 82, sondern von einer der passiven Transporteinheiten 86 mitgeführt werden. Alternativ kann es auch einen gesonderten Energieversorgungswagen geben, welche nur die wiederaufladbaren Energiespeicher 62 mit sich führt und beispielsweise im Transportverband 94 zwischen der Antriebseinheit 82 und der folgenden Transporteinheit 86 angeordnet ist.

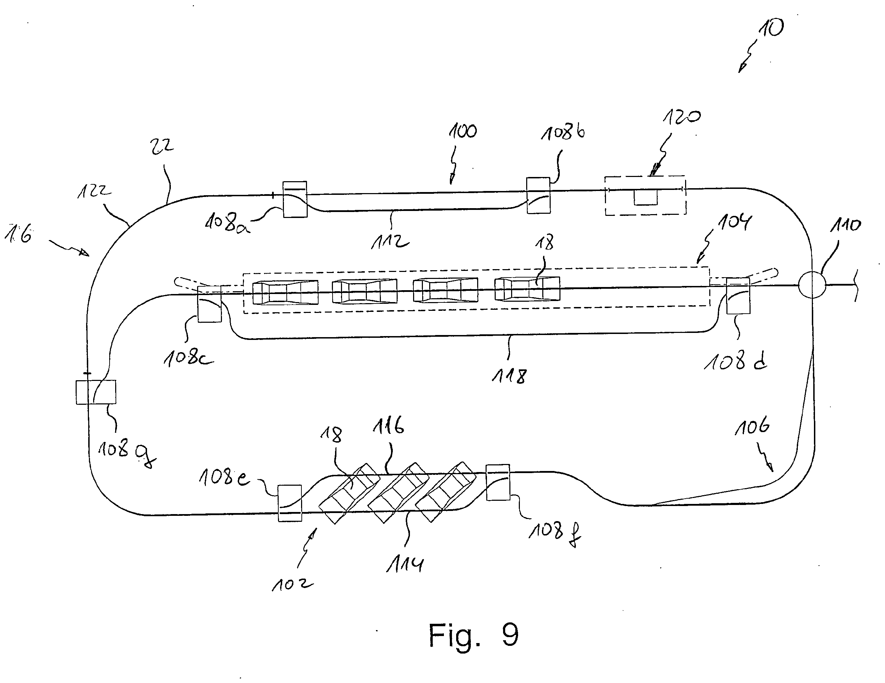

Figur 9 zeigt nun schematisch ein Layout einer Anlage 10 mit verschiedenen Förderzonen und Behandlungszonen, in denen die oben erläuterten Transportwagen 14.1, 14.2, 14.3 und 14.4 eingesetzt werden können.

Dort bezeichnen 100 und 102 jeweils eine Pufferzone, 104 einen Trockner, 106 einen Abschnitt mit geneigten Bereichen, die in beiden möglichen Transportrichtungen als Steigung und Gefälle aufeinander folgen. Mit 108a bis 108g sind Verschiebeweichen und mit 110 ist eine Drehweiche bezeichnet, um eine Streckenkreuzung zu überbrücken. Wenn die Drehweiche 110 ausreichend groß für einen Transportwagen 14.1, 14.2 oder gar für einen Verband-Transportwagen 14.3, 14.4 ist, kann damit zum Beispiel auch ein Richtungswechsel an der Streckenkreuzung erfolgen.

In die Pufferzone 100 mit einem Puffer-Schienenstrang 112 fahren die Transportwagen 14.1, 14.2, 14.3, 14.4 über die dortigen Weichen 108 hintereinander ein. In die Pufferzone 102 können dagegen nur die Transportwagen 14.1 und 14.2 einfahren, da dort eine Art Schrägstellung der Transportwagen 14.1, 14.2 auf zwei parallelen Schienensträngen 114, 116 erfolgt. Dies wird dadurch erreicht, dass zunächst die Vorläufereinheit 34 zum Beispiel die Weiche 108f passiert und auf den Schienenstrang 114 einfährt, die Weiche 108f dann umgestellt wird, so dass die Nachläufereinheit 36 auf den Schienenstrang 116 gelangt und sich der Transportwagen 14.1, 14.2 auf Grund der vorhanden Drehkupplungen 38, 40 quer stellen kann, wie es durch die Stellung der Fahrzeugkarosserien 18 in der Pufferzone 102 angedeutet ist.

Bei dem Trockner 104 können insbesondere die Tragwagen 14.3 und 14.4 eingesetzt werden. Auf diese Weise werden nur wenige Antriebskomponenten der heißen Trockneratmosphäre ausgesetzt. Bei dem Transportwagen 14.4 ist es auch möglich, dass der dortige Schleppwagen 96 die passiven Transporteinheiten 86 an eine alternative Fördertechnik, wie beispielsweise eine Förderkette oder dergleichen, übergibt, mittels welcher die passiven Transporteinheiten 86 dann durch den Trockner 104 gefördert werden. Der Schleppwagen 96 kann dann auf einem Schienenstrang 118 am Trockner 104 vorbei geleitet werden und die passiven Transporteinheiten 96, welche den Trockner 104 verlassen, am Trocknerausgang wieder in Empfang nehmen.

Mit 120 ist exemplarisch eine Ladestation bezeichnet, in welche die mit den wiederaufladbaren Energiespeichern 62 bestückten Fahrwerke der Transportwagen 14.1, 14.2, 14.3 oder 14.4 einfahren und aufgeladen werden können. In der Praxis sind solche Ladestationen 120 auf einem Nebengleis vorhanden, dass ebenfalls über Weichen erreicht werden kann.

Solche Ladestationen 120 können gezielt für einen Ladeprozess angefahren werden, wenn der Ladezustand der Energiespeicher 62 der Transportwagen 14.1, 14.2, 14.3 oder 14.4 einen unteren Schwellenwert erreicht. Ladestationen 120 können auch an Belade- oder Entladestationen ausgebildet sein, an denen die Transportwagen 14.1, 14.2, 14.3 oder 14.4 be- oder entladen werden. So kann die dortige Stehzeit der Transportwagen 14.1, 14.2, 14.3 oder 14.4 für einen Ladevorgang genutzt werden.

Wenn die Energiespeicher 62 eine ausreichend große Kapazität und die Transportwagen 14.1, 14.2, 14.3 oder 14.4 dadurch eine große Reichweite haben, kommt die Anlage 10 mit verhältnismäßig wenigen Ladestationen 120 aus. Dies kann bei Akkumulatoren als Energiespeicher 62 gut umgesetzt werden.

Bei einem anderen Konzept können die Kapazitäten der Energiespeicher 62 und die Abstände zwischen zwei Ladestationen 120 so aufeinander abgestimmt sein, dass die aufgeladenen Energiespeicher 62 nur so viel Energie aufnehmen können, dass die Transportwagen 14.1, 14.2, 14.3 oder 14.4 die Strecke zwischen zwei Ladestationen 120 überbrücken können. Als Energiespeicher 62 kommen in einem solchen Fall insbesondere Kondensatoren in Betracht.

Alternativ oder ergänzend zu solchen Ladestationen 120 kann die Tragschiene 22 Ladeabschnitte 122 umfassen, welche mit einer Stromschiene bestückt sind, von der über einen Schleifschuh oder berührungslos Energie von den Transportwagen 14.1, 14.2, 14.3 oder 14.4 aufgenommen werden kann. Hierzu führen die Transportwagen 14.1, 14.2, 14.3 oder 14.4 entsprechende Stromabnehmer mit sich. In Figur 9 ist der Abschnitt zwischen den Weichen 108a und 108g als Ladeabschnitt 122 gekennzeichnet. Wenn die Transportwagen 14.1, 14.2, 14.3 oder 14.4 solche Ladeabschnitte 122 durchfahren, werden der oder die vorhandenen Energiespeicher 62 aufgeladen.

## Patentansprüche

1. Anlage zum Transportieren von Werkstücken mit
a) einem Schienensystem (20), welches wenigstens eine Tragschiene (22) umfasst;
b) wenigstens einem Transportwagen zum Transportieren von Werkstücken (12), welcher in einer Transportrichtung (32) auf einer Tragschiene (22) verfahrbar ist, mit
ba) einem Transportwagen-Fahrwerk (30; 80; 94) , welches wenigstens eine Antriebsrolle (44.1, 44.2) lagert, die auf einer Antriebslauffläche (46) der Tragschiene (22) abrollbar ist und mittels eines Antriebsmotors (48.1, 48.2) antreibbar ist, der von dem Transportwagen-Fahrwerk (30; 80, 94) mitgeführt wird;
bb) wenigstens einer Befestigungseinrichtung (24) für zumindest ein Werkstück (12), wobei
bc) der Transportwagen (14.1; 14.2; 14.3; 14.4) eine autarke Energieversorgungseinrichtung (60) mit sich führt, mittels welcher der Antriebsmotor (48.1, 48.2) mit Energie versorgbar ist und die wenigstens einen wiederaufladbaren Energiespeicher (62) umfasst;
bd) das Transportwagen-Fahrwerk (30) eine in Transportrichtung (32) vorauseilende Vorläufereinheit (34) und eine in Transportrichtung (32) nacheilende Nachläufereinheit (36) umfasst, welche die Befestigunseinrichtung (24) lagern und mit der Befestigungseinrichtung (24) gekoppelt sind, wobei
be) die Vorläufereinheit (34) eine Antriebsrolle und einen Antriebsmotor (48.1) trägt; und/oder
bf) die Nachläufereinheit (36) eine Antriebsrolle (44.2) und einen Antriebsmotor (48.2) trägt und wobei
bg) die Vorläufereinheit (34) und/oder die Nachläufereinheit (36) den wenigstens einen wiederaufladbaren Energiespeicher (62) trägt, **dadurch gekennzeichnet, dass**
c) auf eine auf eine Installation zur Energieversorgung des Transportwagens (14.1; 14.2; 14.3; 14.4) entlang der Tragschiene (22) verzichtet ist und
d) die Anlage eine Ladestation aufweist, in welche die mit den wiederaufladbaren Energiespeichern bestückten Transportwagen-Fahrwerke einfahren und aufgeladen werden können.

2. Anlage nach Anspruch 1, **dadurch gekennzeichnet, dass** der Transportwagen (14.3; 14.4) als Transportverband (90) ausgebildet ist, bei dem das Transportwagen-Fahrwerk (80, 94) eine Antriebseinheit (82) und ein oder mehrere passive Transporteinheiten (86) umfasst, die lösbar miteinander gekoppelt sind, wobei zumindest die Transporteinheiten (86) jeweils eine Befestigungseinrichtung (24) umfassen.

3. Anlage nach Anspruch 2, **dadurch gekennzeichnet, dass** das Transportwagen-Fahrwerk (80) als Antriebseinheit (82) eine antreibbare Transporteinheit (84) mit einem Fahrwerk (30), welches die wenigstens eine Antriebsrolle (44.1, 44.2) mit sich führt, und eine Befestigungseinrichtung (24) für zumindest ein Werkstück (12) umfasst.

4. Anlage nach Anspruch 2, **dadurch gekennzeichnet, dass** das Transportwagen-Fahrwerk (94) als Antriebseinheit (82) einen Schleppwagen (96) ohne Tragfunktion mit einer Fahrwerkeinheit (96) umfasst, welche die wenigstens eine Antriebsrolle (44.1, 44.2) mit sich führt.

5. Anlage nach Anspruch 2 oder 3, **dadurch gekennzeichnet, dass** die Antriebseinheit (82) die autarke Energieversorgungseinrichtung (60) mit sich führt.

6. Anlage nach einem der vorhergehenden Ansprüche, **dadurch gekennzeichnet, dass** die Trageschiene (22) bodengebunden ist.

## Claims

1. A system for transporting workpieces comprising
a) a rail system (20) comprising at least a carrier rail (22);
b) at least one transport carriage for transporting workpieces (12) movable in a transport direction (32) on a carrier rail (22), comprising
ba) a transport carriage chassis (30; 80; 94), which bears at least a drive roller (44.1, 44.2), which is rollable on a drive running surface (46) of the carrier rail (22) and is drivable by means of a drive motor (48.1, 48.2) which is carried along by the transport carriage chassis (30; 80; 94);
bb) at least one fastening device (24) for at least one workpiece (12), wherein
bc) the transport carriage (14.1; 14,2; 14.3; 14.4) carries along an autonomous power supply device (60) by means of which the drive motor (48.1, 48.2) can be supplied with energy and which comprises the at least one rechargeable energy storage (62);
bd) the transport carriage chassis (30; 80; 94) comprises a leading unit (34), which runs ahead in the transport direction (32) and a trailing unit (36) which runs behind in the transport direction (32), which bear the fastening device (24) and are coupled to the fastening device (24), wherein
be) the leading unit (34) bears a drive roller (44.1) and a drive motor (48.1); and/or
bf) the trailing unit (36) bears a drive roller (44.1) and a drive motor (48.2) and wherein
bg) the leading unit (34) and/or the trailing unit (36) bears the at least one rechargeable energy storage (62),
**characterized in that**
c) an installation for energy supply of the transport carriage (14.1; 14,2; 14.3; 14.4) along the carrier rail (22) is waived and
d) the system comprises a charging station which are entered by the transport carriage chassis equipped with the rechargeable energy storages (62) and where they can be recharged.

2. The system according to patent claim 1,
**characterized in that**
the transport carriage (14.3; 14.4) is formed as a transport train (90), in which the transport carriage chassis (80, 94) comprises a drive unit (82) and one or more passive transport units (86), which are releasably coupled with one another, wherein at least the transport units (86) each comprise a fastening device (24).

3. The system according to patent claim 2
**characterized in that**
the transport carriage chassis (80) comprises as a drive unit (82) a drivable transport unit (84), having a chassis (30), which carries the at least one drive roller (44.1, 44.2) along with it, and a fastening device (24) for at least one workpiece (12).

4. The system according to patent claim 2,
**characterized in that**
the transport carriage chassis (30; 80; 94) comprises as a drive unit (82) a towing carriage (96) without carrying function and having a chassis unit (96) which carries along with it the at least one drive roller (44.1, 44.2).

5. The system according to patent claim 2 or 3,
**characterized in that**
the drive unit (82) carries along with it the autonomous power supply device (60).

6. The system according to any one of the preceding claims, **characterized in that** the carrier rail (22) is ground based.

## Revendications

1. Système de transport de pièces, comportant
a) un système de rail (20) comprenant au moins un rail de support (22);
b) au moins un chariot de transport pour le transport de pièces (12), qui est mobile dans une direction de transport (32) sur un rail de support (22), comportant
ba) un mécanisme de roulement (30; 80; 94) du chariot de transport qui supporte au moins une roue d'entraînement (44.1, 44.2), qui peut rouler sur une surface de roulement (46) du rail de support (22) et qui peut être entraîné au moyen d'un moteur d'entraînement (48.1, 48.2), qui est entraînée par le mécanisme de roulement (30; 80; 94) du chariot de transport;
bb) au moins un moyen de fixation (24) pour au moins une pièce (12), dans lequel
bc) le chariot de transport (14.1; 14.2; 14.3; 14.4) entraîne avec lui un dispositif d'alimentation en énergie autonome (60) au moyen duquel le moteur d'entraînement (48.1, 48.2) est alimenté en énergie et qui comprend au moins un accumulateur d'énergie rechargeable (62);
bd) le mécanisme de roulement (30; 80; 94) du chariot de transport comporte une unité précurseuse précédente (34) et une unité suiveuse (36) suivante dans la direction de transport (32), qui supportent le moyen de fixation (24) et sont couplées au moyen de fixation (24), dans lequel
be) l'unité précurseuse (34) supporte une roue d'entraînement et un moteur d'entraînement (48.1); et/ou
bf) l'unité suivante (36) supporte une roue d'entraînement (44.2) et un moteur d'entraînement (48.2), et dans lequel
bg) l'unité précurseuse (34) et/ou l'unité suivante (36) supporte l'au moins un accumulateur d'énergie rechargeable (62),
**caractérisé en ce que**
c) l'on renonce à une installation pour l'alimentation en énergie du chariot de transport (14,1; 14.2; 14.3; 14.4) le long du rail de support (22) et
d) le système comporte une station de charge dans laquelle les mécanismes de roulement des chariots de transport équipés des accumulateurs d'énergie rechargeable peuvent entrer et être chargés.

2. Système selon la revendication 1,
**caractérisé en ce que**
le chariot de transport (14.3; 14.4) est formé en tant que groupement de transport (90), dans lequel le mécanisme de roulement (80; 94) du chariot de transport comporte une unité d'entraînement (82) et une ou plusieurs unité(s) de transport passive(s) (86), qui sont couplées les unes aux autres de manière détachable, dans lequel au moins les unité(s) de transport (86) comportent chacune un moyen de fixation (24).

3. Système selon la revendication 2,
**caractérisé en ce que**
le mécanisme de roulement (80) du chariot de transport, en tant qu'unité d'entraînement (82), comporte une unité de transport (84) entraînable avec un mécanisme de roulement (30), qui entraîne l'au moins une roue d'entraînement (44.1, 44.2), et un moyen de fixation (24) pour au moins une pièce (12).

4. Système selon la revendication 2,
**caractérisé en ce que** le mécanisme de roulement du chariot de transport (94), en tant qu'unité d'entraînement (82), comporte un chariot de remorquage (96) sans fonction de support avec une unité de mécanisme de roulement (96), qui entraîne l'au moins une roue d'entraînement (44.1, 44.2).

5. Système selon la revendication 2 ou 3,
**caractérisé en ce que** l'unité d'entraînement (82) entraîne le dispositif d'alimentation en énergie autonome (60).

6. Système selon l'une quelconque des revendications précédentes, **caractérisé en ce que** le rail de support (22) est lié au sol.
